# EUROPÄISCHE PATENTSCHRIFT

(11) **EP 1 100 646 B1**
(45) Veröffentlichungstag und Bekanntmachung des Hinweises auf die Patenterteilung: **19.01.2005**
(21) Anmeldenummer: 99927746.0
(22) Anmeldetag: 21.05.1999
(51) Int. Cl.: B23K 23/00

(54) **TRANSPORTABLER REAKTIONSTIEGEL FÜR EINE METALLOTHERMISCHE SCHWEISSPORTION ZUM EINMALIGEN GEBRAUCH**
DISPOSABLE TRANSPORTABLE REACTION CRUCIBLE FOR A METALLOTHERMIC WELDING PORTION
CREUSET DE REACTION TRANSPORTABLE A USAGE UNIQUE POUR PORTION DE SOUDURE METALLOTHERMIQUE

(30) Priorität: 22.05.1998 DE 19822851
(43) Veröffentlichungstag der Anmeldung: 23.05.2001
(73) Patentinhaber: Plötz, Rolf, 51580 Reichshof (DE)
(72) Erfinder: Plötz, Rolf, 51580 Reichshof (DE)
(74) Vertreter: Christophersen & Partner
(86) Internationale Anmeldenummer: PCT/EP1999/003519
(87) Internationale Veröffentlichungsnummer: WO 1999/061194

(56) Entgegenhaltungen:
- EP-A- 0 007 055
- US-A- 3 860 062
- US-A- 4 063 720
- US-A- 4 149 704

## Beschreibung

Die Erfindung betrifft einen transportablen Reaktionstiegel für eine metallothermische, insbesondere aluminothermische, Schweißportion zum einmaligen Gebrauch mit einer Tiegelhülle mit einem zylindrischen Mantel und einem ebenen Boden und mit einem Deckel und mit einer feuerfesten Auskleidung in der Tiegelhülle, die die Schweißportion aufnimmt und an ihrem Boden mit einer aufschmelzbaren Bodenöffnung versehen ist.

Ein solcher Reaktionstiegel ist aus der DE - 197 02 410 C1 bekannt. Bei dem bekannten Reaktionstiegel wird der eigentliche Reaktionstiegel in Form einer Auskleidung aus einem Sandgemisch in eine metallische Tiegelhülle eingestampft oder eingeschossen. Aus diesem Grunde muß die Hülle aus einem hochfesten metallischen schweren Werkstoff erstellt werden. Ein leichter und billigerer Werkstoff wie Pappe, Kunststoff oder dgl. kann nicht eingesetzt werden. Da die Auskleidung entsprechend dem ebenen Boden der Tiegethülle einen ebenen Boden aufweist, wird der Abfluß des Schmelzguts zur Bodenöffnung hin nicht gefördert. In die Auskleidung wird die Schweißportion entweder in einer handelsüblichen Blechdose oder in einem üblichen Kunststoffsack oder in einer sonstigen Umhüllung eingebracht. Bei Einsatz des Reaktionstiegels wird der Deckel abgenommen und die Schweißportion mit Hilfe eines Zündstabs gezündet, worauf der Deckel wieder angebracht wird. Die Metaütiegelhülle erfordert eine gesonderte Entsorgung von der Einsatzstelle.

Es ist die Aufgabe der vorliegenden Erfindung, einen Reaktionstiegel der gattungsgemäßen Art zu schaffen, bei dem für die Tiegelhülle preiswertere Werkstoffe eingesetzt werden können und der eigentliche Reaktionstiegel mit einem geneigten Boden sicher in der Tiegelhülle gehalten ist.

Diese Aufgabe wird dadurch gelöst, daß auf dem ebenen Boden der aus einem nichtmetallischen Werkstoff gefertigten Tiegelhülle eine an den Innendurchmesser des Mantels angepaßte Stützscheibe aus einem Feuerfestmaterial mit ihrer ebenen Unterseite aufliegt, deren Oberseite konisch zu einer mittigen Öffnung hin ausgebildet ist, und daß die feuerfeste Auskleidung ein gesondert gefertigtes und in den Mantel eingeschobenes zylindrisches Reaktionsgefäß ist, dessen Boden entsprechend der Oberseite der Stützscheibe konisch ausgebildet ist und auf der Scheibe aufliegt und mit einem hohlen Führungsansatz in die mittige Öffnung der Stützscheibe eingreift.

Da die Tiegelhülle nicht gleichzeitig als Außenform für das Reaktionsgefäß dienen muß, kann sie aus einem nichtmetallischen Werkstoff, wie Pappe, Hartpapier, Kunststoff oder dgl. gefertigt werden. Zumindest der zylindrische Mantel und der Boden der Tiegelhülle bestehen vorzugsweise aus Pappe, Kunststoff oder dgl. Als Werkstoff wird die Pappe besonders bevorzugt. Das als gesondertes Bauteil gefertigte Reaktionsgefäß ist mit einem konischen Boden versehen werden. Die Stützscheibe sorgt für ein sicheres Abstützen und Zentrieren des Reaktionsgefäßes in der Tiegelhülle.

Der Ausgleich von Fertigungstoleranzen bei der Herstellung des Reaktionsgefäßes und / oder der Aufbau von für die Schmelzreaktion erforderlichen erforderlichen Gesamtwandstärken können in bevorzugter Weise dadurch erreicht werden, daß der Außendurchmesser des Reaktionsgefäßes um einen vorgegeben Betrag kleiner ist als der Innendurchmesser des Mantels und der ringartige Zwischenraum mit einem Feuerfestmaterial, vorzugsweise in feinteiliger Form, aufgefüllt ist.

Für die Ausbildung der Tiegelhülle und des Deckels des Reaktionstiegels gibt es verschiedene Möglichkeiten. Zum einen ist es möglich, der zylindrische Mantel und der Boden der Tiegelhülle und mindestens ein vorzugsweise mit einer Öffnung versehener Deckel des Reaktionstiegels aus Pappe, Hartpapier oder dgl. bestehender Deckel des Reaktionstiegels ist somit aus dem gleichen Material wie die Tiegelhülle ausgebildet. Zum anderen ist es möglich, daß mindestens ein vorzugsweise mit einer Öffnung versehener Deckel des Reaktionstiegels aus einem Feuerfestmaterial besteht. Weiterhin kann es auch zweckmäßig sein, ein Doppeldeckeisystem zu verwenden, bei dem auf einem innenliegenden Deckel aus einem Feuerfestmaterial ein außenliegender Deckel aus einem der anderen genannten Materialien liegt.

Um den oder die Deckel sicher zu galten, ist es von Vorteil, wenn der zylindrische Mantel der Tiegelhülle die freie Kante des Reaktionsgefäßes überragt und auf der freien Kante des Reaktionsgefäßes mindestens einer der Deckel aufliegt und von dem überragenden Mantelabschnitt gehalten ist.

Um den Abschluß luft- und/oder feuchtigkeistdicht zu halten, ist es zweckmäßig, daß zusätzlich zu dem oder den Deckeln auf seiner Außenseite als schützendes und/oder abdichtendes Schutzelement eine vorzugsweise über den oberen Rand des Tiegelhüllenmantels greifende Folie vorgesehen ist.

Dabei ist es möglich, daß die aus Pappe, Kunststoff oder dgl. gefertigten Teile der Tiegelhülle gegen das Durchdringen von Feuchtigkeit ausgerüstet sind, indem z.B. bei Verwendung von Pappe für die Tiegelhülle die Pappe auf ihrer Innenseite mit einer Metallfolie kaschiert ist oder die Pappe mit einer innnenliegenden Folie versehen ist.

Der Führungsansatz kann einstückig mit dem Reaktionsgefäß oder als getrenntes Bauteil ausgebildet sein. Bei der getrennten Ausbildung ist das Einbringen der Schmelzdichtung in den die Bodenöffnung des Reaktionsgefäßes definierenden Führungsansatz erleichtert.

Auf manchen Baustellen, auf denen das metallothermische Schweißverfahren eingesetzt wird, z.B. auf Tunnelbaustellen ist es wünschenswert, daß die aus dem Reaktionstiegel austretenden Gase entstaubt werden. Deshalb ist es zweckmäßig, wenn der Öffnung im Deckel ein Filter aus einem Feuerfestvlies zugeordnet ist. Hierbei kann es zweckmäßig sein, wenn im Deckel eine zusätzliche Zündöffnung vorgesehen ist, wenn der Filter über der Abzugsöffnung fest mit dem Deckel verbunden ist.

Ein besonders stabiler Aufbau der Tiegelhülle ergibt sich, wenn der Boden der Tiegelhülle mit einem umlaufenden Flansch versehen ist und derart in den Mantel eingeklebt ist, daß die freien Kanten von Mantel und Flansch in einer Ebene liegen.

Vorzugsweise wird für die Stützscheibe eine anderes Feuerfestmaterial eingesetzt als für das Reaktionsgefäß, da die Stützscheibe bei Einsatz des Tiegels thermisch weniger belastet wird als das Reaktionsgefäß. Auch das Füllmaterial für den Ringspalt zwischen Mantel und Reaktionsgefäß wird thermisch weniger belastet als das Reaktionsgefäß und kann daher ebenfalls ein anderes sein.

Bei dem erfindungsgemäßen Reaktionstiegel wird vorzugsweise die Schweißportion als freie Schüttung in das Reaktionsgefäß eingebracht und werden der Deckel bzw. die Deckel luftdicht und/oder feuchtigkeistdicht abgeschlossen.

Ausführungsbeispiele des erfindungsgemäßen Reaktionstiegels sollen nun anhand der beigefügten Figuren näher erläutert werden. Es zeigt:
- Fig.1.: einen Vertikalschnitt durch einen Reaktionstiegel,
- Fig.2.: einen Vertikalteilschnitt durch einen Deckel mit Staubfilter und
- Fig.3.: einen Vertikalteilschnitt durch den Bodenbereich eines Reaktionstiegels, bei dem der Führungsansatz des Reaktionsgefäßes als gesondertes Bauteil gefertigt ist.

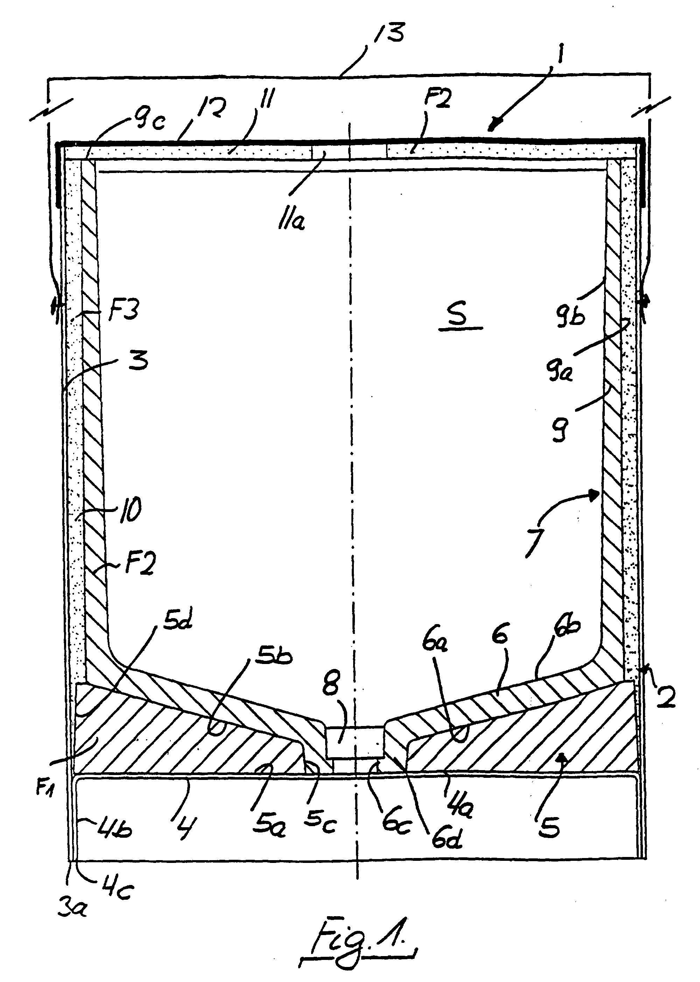

Bei dem in der Fig.1. gezeigten transportablen Reaktionstiegel 1 ist eine Tiegelhülle 2 vorgesehen, die einen zylindrischen Mantel 3 und einen ebenen Boden 4 aufweist. Mantel 3 und Boden 4 sind aus Pappe hergestellt, die auf ihrer Innenseite mit einer feuchtigkeitssperrenden Aluminiumkaschierung K ausgerüstet ist. Der Boden 4 weist einen Bodenabschnitt 4a und einen umlaufenden Flansch 4b auf. Der Boden ist derart in den Mantel 3 eingeklebt, daß die freie untere Kante 3a des Mantels und die freie Kante 4c des Flansches in einer Ebene liegen. Der so gestaltete Boden dient der Versteifung der Tiegelhülle.

Auf der ebenen Oberseite des Bodenabschnitts 4a liegt eine mit ihrem Außendurchmesser an den Innendurchmesser des Mantels angepaßte Stützscheibe 5 aus einem ersten Feuerfestmaterial F1 mit ihrer ebenen Unterseite 5a auf. Die Oberseite 5b der Stützscheibe ist zu einer mittigen Öffnung 5c konisch ausgebildet. Die mittige Öffnung 5c verjüngt sich konisch nach unten. Die äußere Mantelfläche 5d der Stützsscheibe 5 ist leicht konisch nach oben verjüngt ausgebildet.

Zur Aufnahme einer als freie Schüttung in den Reaktiontiegel einzubringenden Schweißportion S sitzt auf der konischen Oberseite 5b der Stützscheibe 5 die entsprechend der Konizität der Oberseite 5b der Stützscheibe konisch ausgebildete Unterseite 6a des Bodens 6 eines gesondert gefertigten und in die Tiegelhülle 1 eingeschobenen Reaktionsgefäßes 7 aus einem Feuerfestmaterial F2 auf. Die Oberseite 6b des Bodens 6 ist entsprechend der Konizität der Unterseite 6a konisch zu einer mittigen Ablauföffnung 6c hin geneigt, die in einem sich von der Unterseite 6a des Bodens 6 nach unten erstreckenden und in die konische Öffnung 5c der Stützscheibe eingreifenden Führungsansatz 6d ausgebildet ist. Die axiale Länge des hohlen Führungsansatz 6d, der einstückig mit dem Boden 6 ausgebildet ist, ist so bemessen, daß er mit der Unterseite 5a der Stützscheibe abschließt. In der Öffnung 6c ist eine durch die metallothermische Reaktion aufschmelzbare Dichtung 8 eingesetzt. Der unterhalb der Öffnung 6c vorhandene Pappboden verbrennt. Es ist jedoch auch möglich, den Boden unterhalb der Öffnung mit einer Vorlochung zu versehen.

Einstückig mit dem Boden 6 ist der Mantel 9 des Reaktionsgefäßes 7 ausgebildet Der Mantel 9 weist eine geradzylindrische Außenfläche 9a und eine sich konisch nach unten verjüngende Innenfläche auf 9b, so daß die Wandstärke des Mantels von oben nach unten zunimmt.

Der Außendurchmesser des Mantel ist vorzugsweise so gewählt, daß er kleiner ist als der Innendurchmesser des Mantels 3 der Tiegelhülle. Der damit aufgespannte Ringraum 10 ist mit einem feinteilgen Feuerfestprodukt F3 wie Sand aufgefüllt und fixiert und zentriert so Stützscheibe 5 und Reaktionsgefäß 7 in der Tiegelhülle.

Wie aus der Fig.1. ersichtlich ist, überragt der Mantel 3 die freie Oberkante 9c des Reaktionsgefäßes 7 um einen Betrag, der der Dicke eines auf die Oberkante 9c aufgelegten Deckels 11 aus dem Feuerfestmaterial F2 entspricht. Der Durchmesser des Deckels 11 entspricht dem Innendurchmesser des Mantels 3.

Der Deckel 11 ist mit einer Zündöffnung 11a versehen, durch die die eingebrachte Schweißportion 6 gezündet werden kann. Um den Deckel 11 zu schützen und die Öffnung 11a zu verschließen, ist auf der Oberseite des Deckels eine Folie 12 aufgebracht, die wenigstens einen Teil des Mantels 3 übergreift. Es ist auch möglich, den ganzen Reaktionstiegel mit einer Folie, vorzugsweise Schrumpffolie zu überziehen. Zur leichteren Handhabung des Einwegtiegels ist an dem Mantel noch ein oder mehrere Traggriffe 13 angebracht.

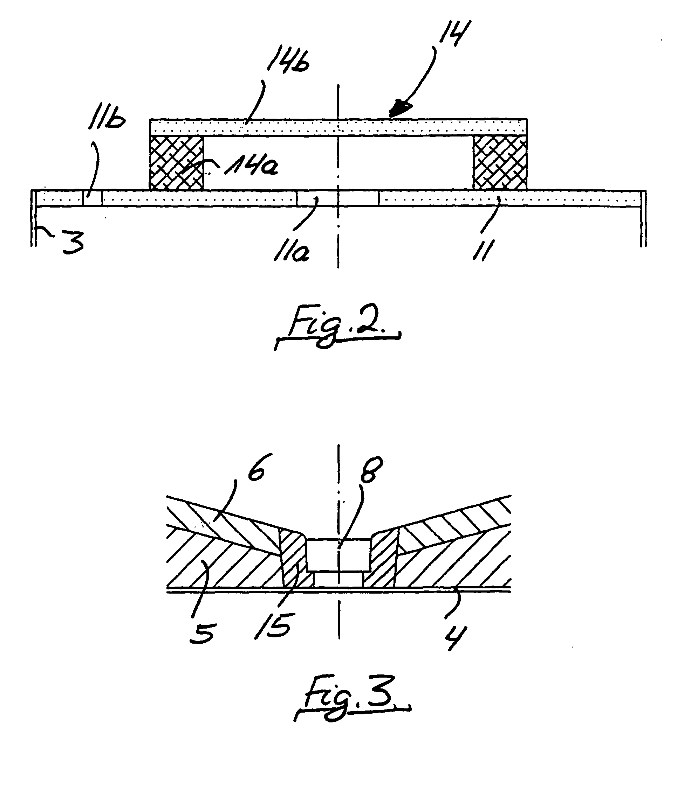

Bei der in der Fig.2. gezeigten Ausführungsform ist dem Deckel 11 noch ein Staubfilter 14 zugeordnet, der die mittige Öffnung 11a überspannt. Der Staubfilter 14 besteht aus einem ringartigen Feuerfestvlies 14a, das zwischen Oberseite des Deckels 11 und einer Deckplatte 14b gehalten ist. Bei der Schmelzreaktion strömen die Gase durch die Öffnung 11a in den Innenraum des Filters und strömen radial nach außen ab. Bei dieser Ausführungsform kann in dem Deckel eine zweite Öffnung 11b als Zündöffnung vorgesehen sein. Der Filteraufbau kann auch mit einer Schrumpffolie überdeckt werden.

Bei der in der Fig.3. gezeigten Ausführungsform ist ein gesondert von dem Boden 6 des Reaktionsgefäßes ausgebildeter Führungsansatz 15 vorgesehen, der in eine entsprechende Öffnung 6e des Bodens eingebracht ist.

## Patentansprüche

1. Transportabler Reaktionstiegel für eine metallothermische, insbesondere aluminothermische, Schweißportion zum einmaligen Gebrauch mit einer Tiegelhülle mit einem zylindrischen Mantel und einem ebenen Boden und mit einem Deckel und mit einer feuerfesten Auskleidung in der Tiegelhülle, die die Schweißportion aufnimmt und an ihrem Boden mit einer aufschmelzbaren Bodenöffnung versehen ist,
**dadurch gekennzeichnet,**
**daß** auf dem ebenen Boden (4) der aus einem nichtmetallischen Werkstoff gefertigten Tiegelhülle (2) eine an den Innendurchmesser des Mantels angepaßte Stützscheibe (5) aus einem Feuerfestmaterial mit ihrer ebenen Unterseite (5a) aufliegt, deren Oberseite (5b) konisch zu einer mittigen Öffnung (5c) hin ausgebildet ist, und daß die feuerfeste Auskleidung ein gesondert gefertigtes und in den Mantel (3) eingeschobenes zylindrisches Reaktionsgefäß (7) ist, dessen Boden (6;6a,6c) entsprechend der Oberseite (5b) der Stützscheibe konisch ausgebildet ist und auf der Scheibe aufliegt und mit einem hohlen (6c) Führungsansatz (6d) in die mittige Öffnung (5c) der Stützscheibe eingreift.

2. Reaktionstiegel nach Anspruch 1,
**dadurch gekennzeichnet,**
**daß** der Außendurchmesser des Reaktionsgefäßes (9) um einen vorgegeben Betrag kleiner ist als der Innendurchmesser des Mantels (3) und der ringartige Zwischenraum (10 ) mit einem Feuerfestmaterial, vorzugsweise in feinteiliger Form, aufgefüllt ist.

3. Reaktionstiegel nach Anspruch 1 oder 2,
**dadurch gekennzeichnet**,
der zylindrische Mantel (3) und der Boden (4) der Tiegelhülle (2) und mindestens ein vorzugsweise mit einer Öffnung versehener Deckel des Reaktionstiegels (1) aus Pappe, Hartpapier oder dgl. bestehen.

4. Reaktionstiegel nach mindestens einem der Ansprüche 1 - 3,
**dadurch gekennzeichnet,**
**daß** mindestens ein vorzugsweise mit einer Öffnung (11a) versehener Deckel (11) des Reaktionstiegels (1) aus einem Feuerfestmaterial besteht.

5. Reaktionstiegel nach mindestens einem der Ansprüche 1 - 4,
**dadurch gekennzeichnet,**
**daß** der zylindrische Mantel (3) der Tiegelhülle die freie Kante (9c) des Reaktionsgefäßes (7) überragt und auf der freien Kante des Reaktionsgefäßes mindestens einer der Deckel (11) aufliegt und von dem überragenden Mantelabschnitt gehalten ist.

6. Reaktionstiegel nach mindestens einem der Ansprüche 1 - 5,
dadurch gekennzeicnet,
daß zusätzlich zu dem oder den Deckeln auf seiner Außenseite als ein schützendes und/oder abdichtendes Schutzelement eine vorzugsweise über den oberen Rand des Tiegelhüllenmantels (3) greifende Folie (12) vorgesehen ist.

7. Reaktionstiegel nach mindestens einem der Ansprüche 1 - 6,
**dadurch gekennzeichnet,**
**daß** die aus Pappe, Hartpapier, Kunststoff oder dgl. gefertigten Teile des Reaktionstiegelshülle gegen das Durchdringen von Feuchtigkeit ausgerüstet sind.

8. Reaktionstiegel nach mindestens einem der Ansprüche 1 - 7,
**dadurch gekennzeichnet,**
**daß** bei Verwendung von Pappe für die Tiegelhülle die Pappe auf ihrer Innenseite mit Metall (K) kaschiert ist.

9. Reaktionstiegel nach mindestens einem der Ansprüche 1 - 7,
**dadurch gekennzeichnet,**
**daß** bei Verwendung von Pappe für die Tiegelhülle die Pappe mit einer innnenliegenden Folie versehen ist.

10. Reaktionstiegel nach mindestens einem der Ansprüche 1 - 9,
**dadurch gekennzeichnet,**
**daß** der Führungsansatz (6c) einstückig mit dem Reaktionsgefäß (7;6,9) oder als getrenntes Bauteil (15) ausgebildet ist.

11. Reaktionstiegel nach mindestens einem der Ansprüche 1 - 10,
**dadurch gekennzeichnet,**
**daß** der Öffnung (11a) im Deckel (11) ein Filter (14) aus einem Feuerfestvlies (14a) zugeordnet ist.

12. Reaktionstiegel nach mindestens einem der Ansprüche 1 - 11,
**dadurch gekennzeichnet,**
**daß** der Boden (4) der Tiegelhülle (2) mit einem umlaufenden Flansch (4a) versehen ist und derart in den Mantel (3) eingeklebt ist, daß die freien Kanten (3a,4c) von Mantel und Flansch in einer Ebene liegen.

13. Reaktionstiegel nach mindestens einem der Ansprüche 1 - 12,
**dadurch gekennzeichnet,**
**daß** für die Stützscheibe (5) eine anderes Feuerfestmatrial (F1) eingesetzt ist als das Feuerfestmaterial (F2) für das Reaktionsgefäß.

14. Reaktionstiegel nach mindestens einem der Ansprüche 1 - 13,
**dadurch gekennzeichnet,**
**daß** die Schweißportion (S) als freie Schüttung in das Reaktionsgefäß eingebracht ist und der Deckel bzw. die Deckel luftdicht (12) abgeschlossen sind.

## Claims

1. Single-use transportable reaction crucible for a metallothermic, in particular aluminothermic, welding portion, comprising a crucible shell having a cylindrical casing and a flat base and having a lid and having a refractory lining in the crucible shell, which crucible shell accommodates the welding portion and is provided on its base with a meltable base opening, **characterized in that** a support disc (5), which is adapted to the inner diameter of the casing and is made of a refractory material, rests with its flat underside (5a) on the flat base (4) of the crucible shell (2) made of a non-metallic material, the upper side (5b) of which support disc is designed to be conical towards a central opening (5c), and **in that** the refractory lining is a specially made cylindrical reaction vessel (7) which is pushed into the casing (3), the base (6; 6a, 6c) of which reaction vessel is designed to be conical in a manner corresponding to the upper side (5b) of the support disc and rests on the disc and engages with a hollow (6c) guide projection (6d) in the central opening (5c) of the support disc.

2. Reaction crucible according to Claim 1, **characterized in that** the outer diameter of the reaction vessel (9) is a predefined degree smaller than the inner diameter of the casing (3) and the annular intermediate space (10) is filled with a refractory material, preferably in finely divided form.

3. Reaction crucible according to Claim 1 or 2, **characterized in that** the cylindrical casing (3) and the base (4) of the crucible shell (2) and at least one lid of the reaction crucible (1), which lid is preferably provided with an opening, are made of cardboard, laminated paper or the like.

4. Reaction crucible according to at least one of Claims 1 to 3, **characterized in that** at least one lid (11) of the reaction crucible (1), which lid is preferably provided with an opening (11a), is made of a refractory material.

5. Reaction crucible according to at least one of Claims 1 to 4, **characterized in that** the cylindrical casing (3) of the crucible shell protrudes beyond the free edge (9c) of the reaction vessel (7) and at least one of the lids (11) rests on the free edge of the reaction vessel and is held by the protruding casing section.

6. Reaction crucible according to at least one of Claims 1 to 5, **characterized in that** in addition to the lid or lids, a film (12) which preferably engages over the upper edge of the crucible shell casing (3) is provided on its outer side as a protective and/or sealing protection element.

7. Reaction crucible according to at least one of Claims 1 to 6, **characterized in that** the parts of the reaction crucible shell which are made of cardboard, laminated paper, plastic or the like are protected against the ingress of moisture.

8. Reaction crucible according to at least one of Claims 1 to 7, **characterized in that**, if cardboard is used for the crucible shell, the cardboard is lined with metal (K) on its inner side.

9. Reaction crucible according to at least one of Claims 1 to 7, **characterized in that**, if cardboard is used for the crucible shell, the cardboard is provided with an inner film.

10. Reaction crucible according to at least one of Claims 1 to 9, **characterized in that** the guide projection (6c) is made in one piece with the reaction vessel (7; 6, 9) or as a separate component (15).

11. Reaction crucible according to at least one of Claims 1 to 10, **characterized in that** the opening (11a) in the lid (11) is assigned a filter (14) made of a refractory nonwoven web (14a).

12. Reaction crucible according to at least one of Claims 1 to 11, **characterized in that** the base (4) of the crucible shell (2) is provided with a peripheral flange (4a) and is glued into the casing (3) such that the free edges (3a, 4c) of casing and flange lie in one plane.

13. Reaction crucible according to at least one of Claims 1 to 12, **characterized in that** the refractory material (F1) used for the support disc (5) is different from the refractory material (F2) used for the reaction vessel.

14. Reaction crucible according to at least one of Claims 1 to 13, **characterized in that** the welding portion (S) is introduced into the reaction vessel as free fill and the lid or lids are closed in an airtight manner (12).

## Revendications

1. Creuset de réaction transportable à usage unique pour une charge de soudure métallothermique, en particulier aluminothermique, avec une gaine de creuset avec une enveloppe cylindrique et un fond plan et avec un couvercle et avec un garnissage réfractaire dans la gaine de creuset qui reçoit la charge de soudure et dont le fond est pourvu d'un orifice qui peut être ouvert par fusion,
**caractérisé en ce que**
un disque d'appui (5) fait d'un matériau réfractaire, dont la face supérieure (5b) est configurée de manière conique par rapport à un orifice central (5c), s'appuie avec sa face inférieure plane (5a) sur le fond plan (4) de la gaine de creuset (2) fabriquée dans un matériau non métallique, et **en ce que** le garnissage réfractaire est un réacteur (7) cylindrique fabriqué séparément et inséré dans l'enveloppe (3) dont le fond (6, 6a, 6c) est configuré de manière conique par rapport à la face supérieure (5b) du disque d'appui et s'appuie sur le disque et s'engrène avec un épaulement de guidage (6d) creux (6c) dans l'orifice central (5c) du disque d'appui.

2. Creuset de réaction selon la revendication 1,
**caractérisé en ce que**
le diamètre extérieur du réacteur (9) est inférieur d'une valeur prédéterminée au diamètre intérieur de l'enveloppe (3) et l'espace annulaire (10) est rempli avec un matériau réfractaire, de préférence sous forme d'éléments fins.

3. Creuset de réaction selon la revendication 1 ou 2,
**caractérisé en ce que**
l'enveloppe cylindrique (3) et le fond (4) de la gaine de creuset (2) et au moins un couvercle du creuset de réaction (1) pourvu, de préférence, d'un orifice, sont constitués de carton, de papier durci ou d'un matériau de ce genre.

4. Creuset de réaction selon l'une quelconque des revendications 1 à 3,
**caractérisé en ce que**
au moins un couvercle (11) du creuset de réaction (1) pourvu, de préférence, d'un orifice (11a) est constitué d'un matériau réfractaire.

5. Creuset de réaction selon l'une quelconque des revendications 1 à 4,
**caractérisé en ce que**
l'enveloppe cylindrique (3) de la gaine de creuset fait saillie au-dessus de l'arête libre (9c) du réacteur (7) et au moins l'un des couvercles (11) repose sur l'arête libre du réacteur et est maintenu par le tronçon d'enveloppe faisant saillie.

6. Creuset de réaction selon l'une quelconque des revendications 1 à 5,
**caractérisé en ce que**
en plus du couvercle ou des couvercles, il est prévu sur sa face externe une feuille (12) s'engrenant, de préférence, au-dessus du bord supérieur de l'enveloppe de gaine de creuset (3), comme élément de protection et/ou d'étanchement.

7. Creuset de réaction selon l'une quelconque des revendications 1 à 6,
**caractérisé en ce que**
les éléments de la gaine de creuset fabriqués en carton, en papier durci ou en un matériau de ce genre sont équipés contre la pénétration d'humidité.

8. Creuset de réaction selon l'une quelconque des revendications 1 à 7,
**caractérisé en ce que**
en cas d'utilisation de carton pour la gaine de creuset, le carton est contrecollé avec un métal (K) sur sa face intérieure.

9. Creuset de réaction selon l'une quelconque des revendications 1 à 7,
**caractérisé en ce que**
en cas d'utilisation de carton pour la gaine de creuset, le carton est muni d'une feuille placée à l'intérieur.

10. Creuset de réaction selon l'une quelconque des revendications 1 à 9,
**caractérisé en ce que**
l'épaulement de guidage (6c) est configuré en une seule partie avec le réacteur (7, 6, 9) ou comme composant séparé (15).

11. Creuset de réaction selon l'une quelconque des revendications 1 à 10,
**caractérisé en ce que**
un filtre (14) constitué d'un non-tissé réfractaire (14a) est associé à l'orifice (11a) dans le couvercle (11).

12. Creuset de réaction selon l'une quelconque des revendications 1 à 11,
**caractérisé en ce que**
le fond (4) de la gaine de creuset (2) est pourvu d'une bride circulaire (4a) et est collé dans l'enveloppe (3) de telle manière que les arêtes libres (3a, 4c) de l'enveloppe et de la bride sont placées dans un plan.

13. Creuset de réaction selon l'une quelconque des revendications 1 à 12,
**caractérisé en ce que**
un matériau réfractaire (F1) autre que le matériau réfractaire (F2) du réacteur est utilisé pour le disque d'appui (5).

14. Creuset de réaction selon l'une quelconque des revendications 1 à 13,
**caractérisé en ce que**
la charge de soudure (S) est introduite dans le réacteur comme produit en vrac et le couvercle ou les couvercles a ou ont une fermeture étanche à l'air.
